# EUROPÄISCHE PATENTSCHRIFT

(11) **EP 2 458 245 B1**
(45) Veröffentlichungstag und Bekanntmachung des Hinweises auf die Patenterteilung: **02.11.2016**
(21) Anmeldenummer: 11184087.2
(22) Anmeldetag: 06.10.2011
(51) Int. Cl.: F16G 3/10, F16G 3/04, B65G 15/30

(54) **Transportband**
Conveyor belt
Bande de transport

(30) Priorität: 25.11.2010 DE 202010015791 U
(43) Veröffentlichungstag der Anmeldung: 30.05.2012
(73) Patentinhaber: Heimbach GmbH & Co. KG, 52353 Düren (DE)
(72) Erfinder: Molls, Christian, 52078 Aachen (DE); Walther, Werner, 4721 Neu-Moresnet (BE)
(74) Vertreter: Albrecht, Ralf

(56) Entgegenhaltungen:
- EP-B1- 1 719 932
- GB-A- 2 094 223
- US-A- 3 900 659
- US-A1- 2007 235 154

## Beschreibung

Die Erfindung betrifft ein Transportband für den Transport stückiger Güter gemäß dem Oberbegriff des Anspruchs 1.

Für die Aufbereitung und Herstellung von Lebensmitteln, beispielsweise in Bäckereimaschinen oder dergleichen, werden textile Transportbänder verwendet, auf die das zu transportierende Lebensmittel aufgelegt und dann zur Weiterverarbeitung in einen anderen Teil der Maschine oder zur Verpackungsstation transportiert wird. Ein solches Transportband hat einen textilen Träger beispielsweise in Form eines Gewebes. Länge und Breite des Transportbandes entsprechen dem jeweiligen Einsatzzweck. Um ein solches Transportband bequem in der jeweiligen Maschine installieren zu können, hat es eine endliche Länge und demgemäß an den Enden Stirnkanten, die über eine Steckdrahtnaht verbindbar sind. Das Einlegen des Transportbandes in die Maschine geschieht in nicht verbundenem Zustand. Erst in der Maschine werden dann die Stirnkanten über die Steckdrahtnaht gekuppelt.

Eine Steckdrahtnaht besteht in der Regel aus zwei Wendeln und einem oder mehreren Steckdrähten. Jeweils eine Wendel ist an der Stirnkante des Trägers angebracht und erstreckt sich über die Breite des Transportbandes. Beim Schließen der Steckdrahtnaht werden die Wendeln in gegenseitige Überlappung gebracht, so dass von den überlappenden Bereichen der Wendeln ein Durchsteckkanal gebildet wird, durch den der Steckdraht geschoben werden kann. Über den Steckdraht werden dann die Wendeln und damit die Stirnkanten des Trägers scharnierartig miteinander gekuppelt.

Bei dem Transportband nach der EP 1 719 932 B1 sind die Wendeln an Textilstreifen angebracht, die sich ebenfalls über die Breite des Transportbandes erstrecken. Die Textilstreifen sind mit dem Träger mittels eines Klebstoffs verbunden. Um Unstetigkeiten im Bereich der Steckdrahtnaht zu vermeiden, hat der Träger im Bereich der Textilstreifen eine geringere Dicke als im übrigen Bereich, wobei die Dicke des Trägers und des an ihm angebrachten Textilstreifen zusammen der Dicke des Trägers im übrigen Bereich entspricht. Ein entsprechendes Transportband ist der US 2007/0235154 A1 zu entnehmen, wobei in diesem Dokument vorgeschlagen wird, den Textilstreifen als Alternative zum Verkleben mit dem Träger zu verschweißen.

Das vorbekannte Transportband befriedigt nicht, was die Haltbarkeit zwischen Träger und Textilstreifen betrifft. Der Erfindung liegt deshalb die Aufgabe zugrunde, ein Transportband der vorstehenden Gattung so zu gestalten, dass die Verbindung zwischen Textilstreifen und Träger haltbarer ist.

Die Aufgabe wird erfindungsgemäß dadurch gelöst, dass die Elemente in den Bereichen benachbart des Trägers angeordnet sind, wobei die Elemente insbesondere ein Additiv aufweisen, das sie für Laserenergie absorptionsfähig macht und bevorzugt Laserlicht im Bereich von 700 nm bis 1200 nm Wellenlänge absorbiert. Auf diese Weise können die Elemente dadurch verschweißt werden, dass sie mit Laserenergie beaufschlagt werden. Unter Verschweißen in diesem Sinne ist das Aufschmelzen von Teilen des Textilstreifens und/oder des Trägers an den einander anliegenden Flächen durch Hitzeeinwirkung und anschließendes Aushärten zu verstehen. Dadurch entsteht eine Haftverbindung zwischen beiden, die deutlich fester und haltbarer ist als bei der bekannten Verbindung mittels Klebstoffen. Als Grundmaterial für die Elemente eignen sich insbesondere Thermoplaste.

Die Anwendung von Laserenergie kann beispielsweise mit Diodenlasern erfolgen. Es kann vorgesehen sein, dass die Elemente ein Additiv aufweisen, das sie für Laserenergie absorptionsfähig macht. Beispiele für solche Additive sind NIR-aktive - also im nahen Infrarotbereich ab 700 nm wirksame - Substanzen, oder welche, die im darüberliegenden Bereich bis 1200 nm absorbieren. Hierfür kommen beispielsweise Kohlenstoffe oder farblose Additive wie Clearweld® von Gentex oder Lumogen® IR von BASF in Frage. Das Additiv erstreckt sich vorzugsweise über die gesamte Länge der absorptiv ausgestatteten Elemente bzw. Textilfäden. Dabei kann das Additiv in den Elementen inkorporiert und/oder auf der Oberfläche der Elemente verteilt werden. Wenn das Additiv inkorporiert ist, sollten die Gewichtsanteile bei 0,10 bis 5% liegen.

Um die Verbindung von Träger und Textilstreifen einfach zu gestalten, sollten die Textilstreifen linienförmig über Schweißnähte mit dem Träger verbunden sein, wobei Schweißnähte, vorzugsweise sämtliche Schweißnähte, senkrecht und/oder parallel zu den Stirnkanten des Transportbandes verlaufen. Sie können dabei parallel zueinander verlaufen. Die Schweißnähte können sich auch kreuzen. Der Abstand benachbarter Schweißnähte kann von 0 bis maximal 20 mm betragen.

In weiterer Ausgestaltung der Erfindung ist vorgesehen, dass die Textilstreifen auf der Seite des Transportbandes angebracht sind, auf der die Verringerung der Dicke des Trägers vorgenommen worden ist, so dass die Textilstreifen in Ausnehmungen des Trägers eingelagert sind. Um die für den Transport der Güter vorgesehene Außenfläche auch im Nahtbereich eben und kontinuierlich zu halten, sollten die Textilstreifen auf der Innenseite des Trägers angebracht sein, also auf der Seite des Trägers, mit dem das Transportband Kontakt zu den Transportwalzen hat, über die es geführt wird.

Die Reduzierung der Dicke des Trägers ist besonders dann einfach, wenn als Träger ein Trägergewebe verwendet wird. In diesem Fall bietet es sich an, im Bereich der Textilstreifen parallel zu den Stirnkanten verlaufende Querfäden zu entfernen und auf diese Weise für einen Dickenreduzierung des Trägers zu sorgen.

Die Erfindung sieht als fakultative Maßnahme des Weiteren vor, dass die Textilstreifen zusätzlich über Nahtfäden mit dem Träger verbunden sind, um der Verbindung zwischen Textilstreifen und Träger noch mehr Festigkeit und Sicherheit zu geben. Die Nahtfäden können Nahtstreifen bilden, die sich parallel zu den Stirnkanten des Trägers und/oder quer dazu erstrecken. Im letzteren Fall sollten sie an den äußeren Rändern der Textilstreifen verlaufen.

Die Erfindung sieht des Weiteren vor, dass die Textilstreifen im Bereich der Wendeln unter Bildung jeweils einer Umschlagkante und eines Umschlagstreifens umgeschlagen sind und die Umschlagstreifen mit dem jeweiligen Textilstreifen vernäht sind. Dabei sollten die Wendeln formschlüssig an der Umschlagkante befestigt sein, beispielsweise in von Längsfäden des Textilstreifens gebildeten Schlaufen.

Nach der Erfindung ist des Weiteren vorgesehen, dass der Träger an der äußeren Flachseite mit einer Abdeckschicht versehen ist. Diese Abdeckschicht kann an die jeweiligen Anforderungen des Transportbandes angepasst sein. So besteht die Möglichkeit, eine gegebenenfalls homogene Beschichtung aufzutragen. Je nach Art der Beschichtung können auf der Außenseite verschiedene Eigenschaften verwirklicht werden. So kann eine glatte Oberfläche oder eine eher rauhe und damit rutschfeste Oberfläche erhalten werden. Durch Wahl eines entsprechenden Werkstoffs kann die Oberfläche besonders abriebfest gestaltet werden. Auch schmutzabweisende oder hydrophobe oder hydrophile Oberflächen lassen sich durch Wahl des Werkstoffes für die Beschichtung verwirklichen. Als Werkstoffe kommen vor allem Silikonelastomere, Fluorsilikonelastomere, Polyuretanelastomere und/oder Acrylelastomere in Frage. Die Beschichtung sollte eine Dicke von bis zu 2 mm haben.

Alternativ zur einer Beschichtung kann der Träger auch mit einer Faserauflage versehen sein, die vorzugsweise aufgenadelt ist. Eine solche Abdeckschicht ergibt eine weiche und nachgiebige Oberfläche. Dabei kann die Faserauflage in mehreren Lagen unterschiedlicher Dichte oder unterschiedlichen Materials für die Fasern aufgeteilt sein. Dabei sollte die Dicke der Faserauflage im Bereich der Textilstreifen zumindest um deren Dicke reduziert sein.

Um Unstetigkeiten im Bereich der Steckdrahtnaht auf ein Minimum zu reduzieren, sollte die Abdeckschicht die Steckdrahtnaht von einer Stirnkante des Trägers her überdecken, wobei sie zweckmäßigerweise im Bereich der Steckdrahtnaht untenseitig ein Abdeckband aufweist, das bei der Herstellung der Abdeckschicht eine Verbindung mit den Wendeln verhindert. Das Abdeckband kann beispielsweise als Textilband ausgebildet sein.

Die Wendeln können - wie bekannt - aus den Werkstoffen PET, PPS oder PEEK hergestellt sein. Für den Träger eigenen sich als Materialien PET, PA, PVDF, PPS oder Aramide oder Kombinationen daraus. Das Material kann für die Fäden verwendet werden, aus denen der Träger bestehen kann. Diese können als Monofilamente, Multifilamente, gesponnene Garne, Zwirne oder Kombinationen daraus ausgebildet sein. Die Wahl des jeweiligen Fadens hängt davon ab, wie flexibel das Transportband sein muss, welche Festigkeit es haben soll und welche Oberfläche ausgebildet werden soll. So kann beispielsweise durch die Verwendung von Multifilamenten, gekräuselten bzw. texturierten Garnen und/oder auch durch Spinnfasergarne ein flauschiger Oberflächencharakter vorzugsweise auf der Außenseite erzeugt werden.

In der Zeichnung ist die Erfindung anhand eines Ausführungsbeispiels näher veranschaulicht. Es zeigen:
- Figur 1: eine Draufsicht auf einen Ausschnitt des erfindungsgemäßen Transportbandes mit Nahtbereich von dessen Innenseite her und
- Figur 2: einen Querschnitt durch das Transportband gemäß Figur 1.

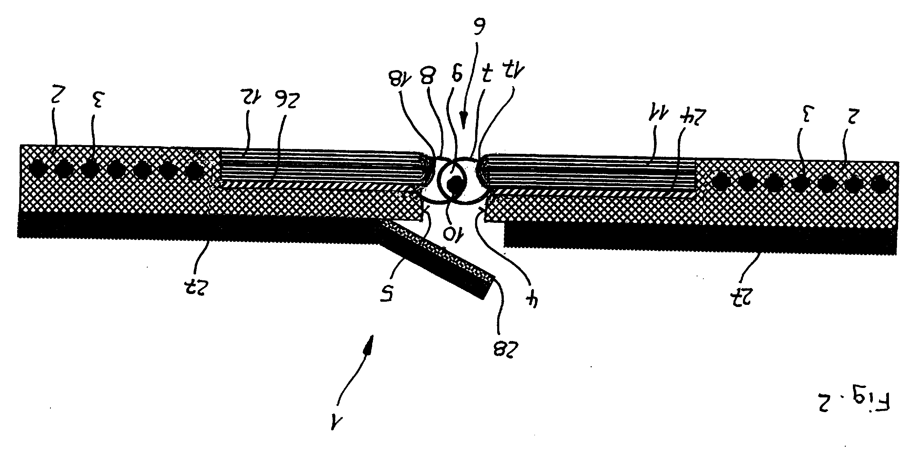

Das in den Figuren dargestellte Transportband 1 weist ein Trägergewebe 2 auf, von dem in Figur 2 nur die Querfäden - beispielhaft mit 3 bezeichnet - dargestellt sind. Die Querfäden 3 sind in einem bestimmten Bindungsmuster mit nicht näher gezeigten Längsfäden verwebt. Längs- und Querfäden 3 bilden insgesamt das Trägergewebe 2.

Das Transportband 1 ist in dem hier dargestellten Bereich aufgeteilt, hat also eine endliche Länge. Dort bildet das Trägergewebe 2 gegenüberliegende Stirnkanten 4, 5 aus. Die Stirnkanten 4, 5 und damit die dortigen Enden des Trägergewebes sind über eine Steckdrahtnaht 6 miteinander gelenkig verbunden.

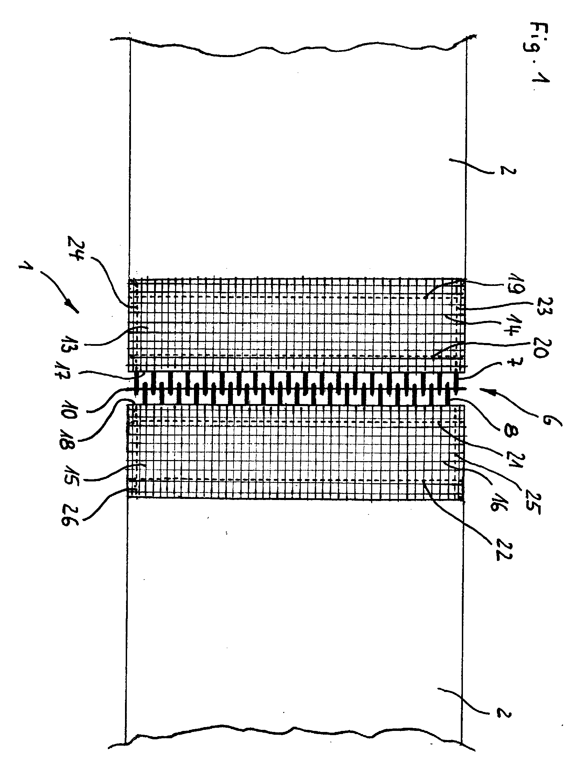

Die Steckdrahtnaht 6 weist zwei Wendeln 7, 8 auf, die sich über die gesamte Länge der Stirnkanten 4, 5, d.h. über die gesamte Breite des Transportbandes 1 erstrecken und in Figur 1 nur schematisch dargestellt sind. Die Wendeln 7, 8 überlappen sich, so dass ein Durchsteckkanal 9 im Überlappungsbereich gebildet wird, durch den ein Steckdraht 10 geschoben ist. Der Steckdraht 10 erstreckt sich ebenfalls über die gesamte Breite des Transportbandes 1 (vgl. Figur 1) und bildet eine Art Scharnierachse für die Steckdrahtnaht 6.

Zu den Stirnkanten 4, 5 hin sind die Wendeln 7, 8 mit Textilstreifen 11, 12 verbunden. Sie sind als Gewebe mit Längs- und Querfäden 13, 14, 15, 16 ausgebildet. Die Verbindung der Wendeln 7, 8 mit den Textilstreifen 11, 12 geschieht in der Weise, dass die Textilstreifen 11, 12 unter Bildung von Umschlagkanten 17, 18 umgeschlagen sind und dass die Wendeln 7, 8 in die dann Schlaufen bildenden Längsfäden 13, 15 der Textilstreifen 11, 12 an den Umschlagkanten 17, 18 eingehängt sind. Damit die Textilstreifen 11, 12 nicht über die Innenseite des Trägergewebes 2 vorstehen, ist das Trägergewebe 2 im Bereich der Textilstreifen 11, 12 dickenreduziert. Dies ist dadurch hergestellt worden, dass in diesem Bereich die Querfäden 3 aus dem Trägergewebe 2 entfernt worden sind.

Die Längs- und Querfäden 13, 14, 15, 16 der Textilstreifen 11, 12 können aus üblichen thermoplastischen Kunststoffmaterialien wie Polyamid 4.6, 6, 6.6, 6.10, 6.12, 11 und 12 sowie Polyester, Polypropylen etc. bestehen. Solche Kunststoffmaterialien sind für Laserlicht, dessen Wellenlänge im Bereich von 700 bis 1200 nm liegt, kaum absoptionsfähig, d.h. sie können beispielsweise mit Hilfe einer Laserdiode nicht zum Schmelzen gebracht werden, um die Textilstreifen 11, 12 mit dem Trägergewebe 2 zu verschweißen. Aus diesem Grund sind die Längs- und Querfäden 13, 14, 15, 16 der Textilstreifen 11, 12 auf den dem Trägergewebe 2 zugewandten Seiten mit Kohlenstoff beschichtet, wodurch in diesem Bereich Absorptionsfähigkeit hergestellt wird. Durch Bestrahlen der Textilstreifen 11, 12 von der freien Innenseite her werden die dem Trägergewebe 2 benachbarten Längs- und Querfäden 13, 14, 15, 16 der Textilstreifen 11, 12 aufgeschmolzen und gehen damit eine Verbindung mit dem Trägergewebe 2 ein.

Wie insbesondere aus Figur 1 zu ersehen ist, werden mit Hilfe des Lasers pro Textilstreifen 11, 12 zwei parallel zu den Stirnkanten 4, 5 verlaufende Schweißnähte 19, 20 bzw. 21, 22 mit jeweils zwei sich quer zu den Stirnkanten 4, 5 erstreckenden Schweißnähten 23, 24 bzw. 25, 26 kombiniert, indem der Laserstrahl entsprechend über die freien Seiten der Textilstreifen 11, 12 geführt wird. Die letzteren Schweißnähte 23, 24 bzw. 25, 26 verlaufen im Bereich der Ränder des Trägergewebes 2. Es versteht sich, dass weitere Schweißnähte vorgesehen sein können, wenn hohe Ansprüche an die Festigkeit der Verbindung zwischen Textilstreifen 11, 12 und Trägergewebe 2 gestellt werden. Auf die Außenseite des Trägergewebes 2 ist eine Kunststoffbeschichtung 27 aufgebracht. Sie soll dem Transportband 1 eine gewünschte Oberfläche für den Transport der Stückgüter bereitstellen. Damit die Kunststoffbeschichtung 27 auch den Nahtbereich, also den Bereich der Wendeln 7, 8 überdeckt, ist bei dem Auftragen der Kunststoffbeschichtung 27 dieser Bereich durch ein textiles Abdeckband 28 geschützt worden. Nach Aufbringen der Kunststoffbeschichtung 27 ist diese dann aufgetrennt worden, so dass die Beschichtung 27 im Nahtbereich angehoben werden kann. Dadurch besteht die Möglichkeit, das Transportband 1 durch Herausziehen des Steckdrahtes 10 zu öffnen und nach Installation in einer Maschine auch wieder zu schließen und dann den hier hochstehend gezeigten Teil der Kunststoffbeschichtung 27 bündig abzusenken.

## Patentansprüche

1. Transportband (1) für den Transport stückiger Güter, insbesondere von Lebensmitteln, mit einem Träger (2), der endseitig Stirnkanten (4, 5) aufweist, die über eine Steckdrahtnaht (6) verbindbar sind, wobei die Steckdrahtnaht (6) wenigstens zwei über die Breite des Transportbands (1) sich erstreckende Wendeln (7, 8) aufweist, die an Textilstreifen (11, 12) angebracht sind, die mit dem Träger (2) verbunden sind, so dass eine Wendel (7) an der einen Stirnkante (4) und eine Wendel (8) an der anderen Stirnkante (5) angebracht sind, wobei die Wendeln (7, 8) derart in Überlappung bringbar sind, dass ein Steckdraht (10) zur Kupplung der Wendeln (7, 8) und damit der Stirnkanten (4, 5) durch die sich überlappenden Bereiche der Wendeln (7, 8) steckbar ist, und wobei der als Textil ausgebildete Träger (2) im Bereich der Textilstreifen (11, 12) eine geringere Dicke hat als im übrigen Bereich und die Dicke des Trägers (2) und des an ihm angebrachten Textilstreifens (11, 12) zusammen der Dicke des Trägers (2) im übrigen Bereich entspricht, wobei die Textilstreifen (11, 12) Elemente, insbesondere Textilfäden (13, 14, 15, 16), aufweisen, die aus einem aufschmelzbaren Kunststoff, insbesondere einem Thermoplast, bestehen, wobei die Textilstreifen (11, 12) durch Aufschmelzen dieser Elemente mit dem Träger (2) verschweißt sind, wobei die Elemente für Laserenergie absorptionsfähig sind, **dadurch gekennzeichnet, dass** die Elemente in den Bereichen benachbart des Trägers (2) angeordnet sind, wobei die Elemente insbesondere ein Additiv aufweisen, das sie für Laserenergie absorptionsfähig macht und bevorzugt Laserlicht im Bereich von 700 nm bis 1200 nm Wellenlänge absorbiert.

2. Transportband nach Anspruch 1, **dadurch gekennzeichnet, dass** die Textilstreifen (11, 12) linienförmig über Schweißnähte (19 bis 26) mit dem Träger (2) verbunden sind, wobei insbesondere Schweißnähte (19 bis 26) senkrecht und/oder parallel zu den Stirnkanten (4, 5) des Transportbandes (1) verlaufen.

3. Transportband nach Anspruch 2, **dadurch gekennzeichnet, dass** sich Schweißnähte (19 bis 26) kreuzen und/oder parallel zueinander verlaufen.

4. Transportband nach Anspruch 2 oder 3, **dadurch gekennzeichnet, dass** benachbarte Schweißnähte (19 bis 26) maximal einen Abstand von 20 mm haben.

5. Transportband nach einem der Ansprüche 1 bis 4, **dadurch gekennzeichnet, dass** die Textilstreifen (11, 12) auf der Seite des Transportbandes (1) angebracht sind, auf der die Verringerung der Dicke des Trägers (2) vorgenommen worden ist und/oder dass die Textilstreifen (11, 12) auf der Innenseite des Trägers (2) angebracht sind.

6. Transportband nach einem der Ansprüche 1 bis 5, **dadurch gekennzeichnet, dass** der Träger als Trägergewebe (2) ausgebildet ist, bei dem im Bereich der Textilstreifen (11, 12) parallel zu den Stirnkanten (4) verlaufende Querfäden (3) zum Zwecke der Reduzierung der Dicke des Trägergewebes (2) entfernt sind.

7. Transportband nach einem der Ansprüche 1 bis 6, **dadurch gekennzeichnet, dass** die Textilstreifen (11, 12) zusätzlich über Nahtfäden mit dem Träger (2) verbunden sind, wobei insbesondere die Nahtfäden Nahtstreifen bilden, die sich parallel zu den Stirnkanten (4, 5) des Trägers (2) und/oder quer dazu erstrecken und bevorzugt die sich zu den Stirnkanten (4, 5) quer erstreckenden Nahtstreifen an den äußeren Rändern der Textilstreifen (11, 12) verlaufen.

8. Transportband nach einem der Ansprüche 1 bis 7, **dadurch gekennzeichnet, dass** die Textilstreifen (11, 12) im Bereich der Wendeln (7, 8) unter Bildung jeweils einer Umschlagkante (17, 18) und eines Umschlagstreifens umgeschlagen sind und die Umschlagstreifen mit dem jeweiligen Textilstreifen (11, 12) vernäht sind, wobei insbesondere die Wendeln (7, 8) formschlüssig an der Umschlagkante (17, 18) befestigt sind.

9. Transportband nach einem der Ansprüche 1 bis 8, **dadurch gekennzeichnet, dass** der Träger (2) an der äußeren Flachseite mit einer Abdeckschicht (27) versehen ist.

10. Transportband nach Anspruch 9, **dadurch gekennzeichnet, dass** die Abdeckschicht als Beschichtung (27) ausgebildet ist, die bevorzugt insbesondere aus Silikonelastomer, Fluorsilikonelastomer, Polyurethanelastomer und/oder Acrylelastomer besteht und bevorzugt eine Dicke von bis zu 2 mm hat.

11. Transportband nach Anspruch 9, **dadurch gekennzeichnet, dass** die Abdeckschicht als Faserauflage ausgebildet ist, wobei insbesondere die Dicke der Faserauflage im Bereich der Textilstreifen zumindest um deren Dicke reduziert ist.

12. Transportband nach einem der Ansprüche 9 bis 11, **dadurch gekennzeichnet, dass** die Abdeckschicht (27) die Steckdrahtnaht (6) von einer Stirnkante (5) des Trägers (2) her überdeckt, wobei die Abdeckschicht (27) insbesondere im Bereich der Steckdrahtnaht (6) untenseitig ein Abdeckband (28) aufweist, das bevorzugt als Textilband ausgebildet ist.

13. Transportband nach einem der Ansprüche 1 bis 12, **dadurch gekennzeichnet, dass** die Wendeln (7, 8) aus PET, PPS oder PEEK bestehen und/oder dass der Träger (2) aus PET, PA, PVDF, PPS oder Aramiden oder Kombinationen daraus besteht.

14. Transportband nach einem Ansprüche 1 bis 13, **dadurch gekennzeichnet, dass** der Träger (2) aus Fäden (3) besteht, die als Monofilamente, Multifilamente, gesponnene Garne, Zwirne oder Kombinationen daraus ausgebildet sind und/oder dass der Träger (2) ausschließlich in der die Außenseite bildenden Lage Spinnfasergarne aufweist.

## Claims

1. A conveyor belt (1) for the conveyance of piece goods, in particular food, comprising a support (2) that has end edges (4, 5) at its ends which can be connected by a pintle wire seam (6), the pintle wire seam (6) having at least two coils (7, 8) extending over the width of the conveyor belt (1) and which are attached to textile strips (11, 12) that are connected to the support (2) so that one coil (7) is attached at one end edge (4) and one coil (8) is attached at the other end edge (5), the coils (7, 8) being able to be overlapped so that a pintle wire (10) can be placed through the overlapping areas of the coils (7, 8) in order to couple the coils (7, 8), and so the end edges (4, 5), and the support (2) in the form of a textile having a smaller thickness in the area of the textile strips (11, 12) than in the remaining area, and the thickness of the support (2) and of the textile strip (11, 12) attached to it together corresponding to the thickness of the support (2) in the remaining area, the textile strips (11, 12) having elements, in particular textile threads (13, 14, 15, 16), that are made of a melt-on plastic, in particular a thermoplastic, the textile strips (11, 12) being welded to the support (2) by melting on these elements, the elements being absorbent of laser energy, **characterised in that** the elements are arranged in the areas adjacent to the support (2), the elements in particular having an additive that makes them absorbent of laser energy and that preferably absorbs laser light with a wavelength in the range of 700 nm to 1200 nm.

2. The conveyor belt according to Claim 1, **characterised in that** the textile strips (11, 12) are connected linearly to the support (2) by means of weld seams (19 to 26), weld seams (19 to 26) in particular running perpendicular and/or parallel to the end edges (4, 5) of the conveyor belt (1).

3. The conveyor belt according to Claim 2, **characterised in that** the weld seams (19 to 26) cross and/or run parallel to one another.

4. The conveyor belt according to Claim 2 or 3, **characterised in that** adjacent weld seams (19 to 26) a spaced apart by a maximum distance of 20 mm.

5. The conveyor belt according to any of Claims 1 to 4, **characterised in that** the textile strips (11, 12) are attached to the side of the conveyor belt (1) on which the thickness of the support (2) has been reduced and/or that the textile strips (11, 12) are attached to the inside of the support (2).

6. The conveyor belt according to any of Claims 1 to 5, **characterised in that** the support is in the form of a support fabric (2) in which transverse threads (3) running parallel to the end edges (4) in the area of the textile strips (11, 12) are removed for the purpose of reducing the thickness of the support fabric (2).

7. The conveyor belt according to any of Claims 1 to 6, **characterised in that** the textile strips (11, 12) are additionally connected to the support (2) by seam threads, the seam threads in particular forming seam strips that extend parallel to the end edges (4, 5) of the support (2) and/or transversely to the latter, and preferably the seam strips extending transversely to the end edges (4, 5) running on the outer edges of the textile strips (11, 12).

8. The conveyor belt according to any of Claims 1 to 7, **characterised in that** the textile strips (11, 12) are turned over in the area of the coils (7, 8) such as to form in each case a turned over edge (17, 18) and a turned over strip and that the turned over strips are stitched to the respective textile strip (11, 12), in particular the coils (7, 8) being fastened with form locking to the turned over edge (17, 18).

9. The conveyor belt according to any of Claims 1 to 8, **characterised in that** the support (2) is provided with a covering layer (27) on the outer flat side.

10. The conveyor belt according to Claim 9, **characterised in that** the covering layer is in the form of a coating (27) that is preferably made in particular of silicone elastomer, fluorosilicone elastomer, polyurethane elastomer and/or acrylic elastomer and preferably has a thickness of up to 2 mm.

11. The conveyor belt according to Claim 9, **characterised in that** the covering layer is in the form of a fibre overlay, in particular the thickness of the fibre overlay in the area of the textile strips being reduced by at least the thickness of the latter.

12. The conveyor belt according to any of Claims 9 to 11, **characterised in that** the covering layer (27) covers the pintle wire seam (6) from one end edge (5) of the support (2), the covering layer (27) having in particular on the underside in the area of the pintle wire seam (6) a covering tape (28) that is preferably in the form of a textile tape.

13. The conveyor belt according to any of Claims 1 to 12, **characterised in that** the coils (7, 8) are made of PET, PPS or PEEK and/or that the support (2) is made of PET, PA, PVDF, PPS or aramides or combinations of the latter.

14. The conveyor belt according to any of Claims 1 to 13, **characterised in that** the support (2) is made of threads (3) that are in the form of monofilaments, multi-filaments, spun yarns, twines or combinations of the latter, and/or that the support (2) only has spinning fibre yarns in the layer forming the outside.

## Revendications

1. Bande de transport (1) pour le transport de produits en morceaux, notamment de produits alimentaires, avec un support (2), qui présente du côté de l'extrémité des bords frontaux (4, 5), qui sont reliables par l'intermédiaire d'une couture de fil d'enfichage (6), la couture de fil d'enfichage (6) présentant au moins deux spirales (7, 8) s'étendant sur la largeur de la bande de transport (1), qui sont apposées sur des bandes textiles (11, 12), qui sont reliées avec le support (2), de sorte qu'une spirale (7) est apposé sur l'un des bords frontaux (4) et une spirale (8) sur l'autre bec d'attaque (5), les spirales (7, 8) étant mettables en chevauchement de sorte qu'un fil enfichable (10) en vue d'accoupler les spirales (7, 8) et par conséquent les bords frontaux (4, 5) est enfichable à travers les zones se chevauchant des spirales (7, 8), et que le support (2) constitué comme textile dans la zone des bandes textiles (11, 12) possède une épaisseur inférieure à dans la zone restante et que l'épaisseur du support (2) et des bandes textiles apposées sur celui-ci (11, 12) correspond globalement à l'épaisseur du support (2) dans la zone restante, les bandes textiles (11, 12) présentant des éléments, notamment des fils textiles (13, 14, 15, 16), qui se composent d'un plastique fusible, notamment d'un thermoplastique, les bandes textiles (11, 12) étant soudées par la fusion de ces éléments au support (2), les éléments étant aptes à l'absorption pour l'énergie laser, **caractérisée en ce que** les éléments sont disposés dans les zones avoisinantes du support (2), les éléments présentant notamment un additif, qui les rend aptes à l'absorption pour l'énergie laser et de préférence de la lumière laser dans la zone de 700 nm à 1200 nm de longueur d'onde.

2. Bande de transport selon la revendication 1, **caractérisée en ce que** les bandes textiles (11, 12) sont reliées linéairement via des cordons de soudure (19 à 26) au support (2), des cordons de soudure (19 à 26) s'étendent notamment verticalement et/ou parallèlement aux bords frontaux (4, 5) de la bande de transport (1).

3. Bande de transport selon la revendication 2, **caractérisée en ce que** des cordons de soudure (19 à 26) se croisent et/ou s'étendent parallèlement l'un à l'autre.

4. Bande de transport selon les revendications 2 ou 3, **caractérisée en ce que** des cordons de soudure avoisinants (19 à 26) possèdent un écartement maximal de 20 mm.

5. Bande de transport selon une quelconque des revendications 1 à 4, **caractérisée en ce que** les bandes textiles (11, 12) sont apposées sur le côté de la bande de transport (1) sur lequel la réduction de l'épaisseur du support (2) a été réalisée et/ou **en ce que** les bandes textiles (11, 12) sont apposées sur le côté intérieur du support (2).

6. Bande de transport selon une quelconque des revendications 1 à 5, **caractérisée en ce que** le support est constitué comme tissu de support (2), dans lequel, dans la zone des bandes textiles (11, 12), des fils de trame (3) se produisant parallèlement aux bords frontaux (4) sont retirés en vue de la réduction de l'épaisseur du tissu de support (2).

7. Bande de transport selon une quelconque des revendications 1 à 6, **caractérisée en ce que** les bandes textiles (11, 12) sont reliées en plus par l'intermédiaire de fils de couture au support (2), les fils de couture constituant notamment des bandes de couture, qui s'étendent parallèlement aux bords frontaux (4, 5) du support (2) et/ou transversalement à ceux-ci, et les bandes de couture s'étendant parallèlement aux bords frontaux (4, 5) circulant de préférence sur les bordures externes des bandes textiles (11, 12).

8. Bande de transport selon une quelconque des revendications 1 à 7, **caractérisée en ce que** les bandes textiles (11, 12) sont rabattues dans la zone des spirales (7, 8) en formant respectivement une arête de revers (17, 18) et une bande de revers, et **en ce que** les bandes de revers sont cousues avec les bandes textiles respectives (11, 12), les spirales (7, 8) étant notamment fixés mécaniquement sur l'arête de revers (17, 18).

9. Bande de transport selon une quelconque des revendications 1 à 8, **caractérisée en ce que** le support (2) est doté sur le côté plat extérieur d'une couche de recouvrement (27).

10. Bande de transport selon la revendication 9, **caractérisée en ce que** la couche de recouvrement est constituée comme revêtement (27), qui se compose de préférence notamment d'élastomère de silicone, d'élastomère de fluorosilicone, d'élastomère de polyuréthane et/ou d'élastomère acrylique et possède de préférence une épaisseur de jusqu'à 2 mm.

11. Bande de transport selon la revendication 9, **caractérisée en ce que** la couche de recouvrement est constituée comme appui en fibres, l'épaisseur de l'appui en fibre étant notamment réduite dans la zone des bandes textiles au moins de leur épaisseur.

12. Bande de transport selon une quelconque des revendications 9 à 11, **caractérisée en ce que** la couche de recouvrement (27) recouvre la couture de fil d'enfichage (6) à partir d'un bec d'attaque (5) du support (2), la couche de recouvrement (27) présentant notamment dans la zone de la couture de fil d'enfichage (6) une bande de recouvrement (28) sur le côté inférieur, qui est constituée de préférence comme bande textile.

13. Bande de transport selon une quelconque des revendications 1 à 12, **caractérisée en ce que** les spirales (7, 8) sont constitués de PET, de PPS ou de PEEK, et/ou **en ce que** le support (2) est constitué de PET, de PA, de PVDF, de PPS ou d'aramides, ou de leurs combinaisons.

14. Bande de transport selon une quelconque des revendications 1 à 13, **caractérisée en ce que** le support (2) est constitué de fils (3) qui sont constitués de monofilaments, de multifilaments, de fils filés, de fils retors ou de leurs combinaisons et/ou **en ce que** le support (2) présente uniquement des fils de fibre filée dans la position constituant le côté extérieur.
